# EUROPÄISCHE PATENTSCHRIFT

(11) **EP 0 960 705 B1**
(45) Veröffentlichungstag und Bekanntmachung des Hinweises auf die Patenterteilung: **21.03.2007**
(21) Anmeldenummer: 99110060.3
(22) Anmeldetag: 22.05.1999
(51) Int. Cl.: B27B 31/00, B27B 25/02, B23Q 7/00, B27B 25/04

(54) **Abbundanlage mit Werkstückpositioniervorrichtung**
Trimming machine with workpiece positioning device
Machine de coupe à dispositif pour le positionnement de la pièce

(30) Priorität: 29.05.1998 DE 19824120
(43) Veröffentlichungstag der Anmeldung: 01.12.1999
(73) Patentinhaber: Schmidler, Hans, 91180 Heideck (DE); Schmidler, Richard, 91180 Heideck (DE)
(72) Erfinder: Schmidler, Hans, 91180 Heideck (DE); Schmidler, Richard, 91180 Heideck (DE)
(74) Vertreter: Führing, Dieter

(56) Entgegenhaltungen:
- EP-A- 0 366 200
- CA-A- 2 305 850
- DE-A- 3 511 272
- DE-A- 3 713 260
- GB-A- 1 413 106

## Beschreibung

Die Erfindung betrifft eine Abbundanlage gemäß dem Oberbegriff des Anspruches 1.

Eine solche Abbundvorrichtung ist aus DE 3713260 bekannt.

Eine solche Abbundanlage ist auch etwa beschrieben in der DE 42 14 057 A1 und detaillierter noch in der (zum Beleg des Standes der Technik in Kopie zur Anmeldungsakte eingereichten) Firmendruckschrift "SCHMIDLER Abbundanlagen - Qualität setzt Maßstäbe" (undatiert; erschienen 1994), auf die hier in Ergänzung zur nachfolgenden Beschreibung Bezug genommen wird.

Solche Abbundanlage gattungsgemäßer Art dient der konstruktionsgerechten Profilierung von Werkstücken wie Brettern und vor allem Balken für den zimmermannsmäßigen Holzbau; auf die in der Firmendruckschrift gezeigten Beispiele von dafür profilierten Holzbalken wird auch diesbezüglich verwiesen. Eine gattungsgemäße Abbundanlage weist typischerweise, zwischen ihren funktional in die Anlage integrierten passiven Einförder- und Ausförder-Rollenbahnen, hinter einer Säge eine unterschiedlich bestückbare Maschinenzone auf. Die Säge ist regelmäßig als Untertisch-Schwenkkappsäge (bevorzugt nach DE-PS 38 18 468) vor allem zum quergerichteten Ablängen bzw. winkligen Anschneiden der nacheinander zugeführten Werkstücke jeweils an ihren vorderen und rückwärtigen Stirnenden ausgelegt. In Transportrichtung (also in Werkstück-Vorschubrichtung der Abbundanlage vom Belieferungs-Anfang zum Entnahme-Ende hin gesehen) schließt sich an die Säge die Maschinenzone mit wenigstens einer weiteren Bearbeitungsstation an. Bei der handelt es sich in modernen Abbundanlagen vorzugsweise um eine Universal-Fräsmaschine mit verschwenkbaren Walzen- und Fingerfräsern sowie gegebenenfalls mit einem zusätzlichen, quer dazu sowie quer zur Werkstück-Transportrichtung orientierten Konturenfräser. Unter Umständen folgt als weitere Bearbeitungsstation innerhalb der Maschinenzone eine Gruppierung aus Horizontal- und Vertikalbohrern. Etwaige Abstände zwischen den aufeinanderfolgenden Bearbeitungsstationen sind durch Vorschubbetten in Form von Tischen oder von ebenfalls passiven (also nicht selbst das Werkstück antreibenden) Übergabe-Rollenbahnen überbrückt Längs der Säge und der ihr folgenden Maschinenzone sowie längs der am Anfang und am Ende in die Anlage integrierten Rollenbahnen verläuft eine als hinterer Anschlag und als Längsführung dienende, anlagenfeste Leiste.

Der Werkstück-Transport in eine vorgegebene Bearbeitungsposition relativ zum Werkzeug einer Bearbeitungsstation (insbesondere zum Sägeblatt, zum Fräser bzw. zum Bohrer) erfolgt beim Stande der Technik mittels eines reibkraftschtüssig und deshalb werkstückschonend gegen die Werkstück-Oberfläche angelegten Schleppschuhes am unteren Ende eines das Werkstück nachziehenden Schwenkarmes. Der Arm wird von einem Transportwagen her unter spitzem Winkel auf die Oberfläche des Werkstücks herabgeschwenkt, um dieses dann in Transportrichtung nachzuschleppen. Dafür ist der Arm so hoch über dem Vorschubbett an den Wagen angelenkt; daß bei dessen Verfahren nach Art einer Laufkatze längs einer über die gesamte Länge der Abbundanlage sich erstreckenden Schiene keine Kollision des Wagens mit Bearbeitungswerkzeugen und deren Halterungen auftreten kann. Aus diesen geometrischen Vorgaben resultiert ein langer Andruck-Hebelarm, also ein recht großer in Transportrichtung gemessener Abstand zwischen dem Schleppschuh und seinem Transportwagen. Außer solchem regulären Vorschub in der Transportrichtung durch die Abbundanlage hindurch kann vorübergehend auch ein Werkstück-Rückhub z.B. für die exakte Positionierung in der Bearbeitungsposition oder für Rückkehr in eine zuvor schon einmal überfahrene Bearbeitungsposition vorkommen.

Die Positionierung des vom Schleppschuh zum Transport auf das Vorschubbett gedrückten Werkstückes wird aus einer zentralen Programmsteuerung nach Maßgabe einer Wegmessung am Transportwagen vorgenommen, der längs der Fahrschiene über die gesamte Baulänge der Anlage und damit auch über ihre Einförder- und Ausförder-Rollenbahnen hinweg verfahrbar ist. Erforderlichenfalls wird der Vorschub im Zuge der Positionierbewegung um einen direkt zwischen Werkstück-Oberfläche und Schleppschuh gemessenen Schlupf korrigiert (wie in der DE-OS 42 37 048 näher beschrieben).

Eine Abbundanlage besteht also aus wenigstens einer universell einsetzbaren Maschinenzone hinter einer Säge als der Eingangs-Bearbeitungsstation - diese Säge allein, wie sie oben als unter Tisch betriebene, kombinierte Schwenk- und Kapp-Säge zitiert wurde oder wie sie in weniger komplexer Funktionalität aus der DE 35 11 272 A1 bekannt ist, stellt noch keine Abbundanlage dar. Die letzterwähnte Säge arbeitet auch nicht eingebunden in eine Abbundanlage vor wenigstens einer Maschinenzone zur Profilbearbeitung durch Fräsen oder Bohren, sondern isoliert vor einer Stapeleinrichtung. Die Besonderheit dieser Säge besteht darin, daß bei ihr sensorisch erfaßt wird, wo auf einem Brett oder Balken Markierungen zur Kennzeichnung von guten und von schlechten Teilstücken vorhanden sind. Erforderlichenfalls wird die auf die Säge folgende Antriebsvorrichtung in Vorschubrichtung, also von der Säge fort, verfahren. Dadurch öffnet sich unmittelbar hinter der Säge eine Lücke, durch welche das momentan abgeschnittene schlechte Teilstück nach unten herausfällt; so daß nur eine Folge verschieden langer guter Teilstücke zum Abtransport in die Stapeleinrichtung verbleibt. Die Länge des der Säge zugeführten, noch nicht zersägten Balkens wird mittels eines Gebers erfaßt, wofür vor der Säge eine Rolle oder ein Raupenzug auf den Balken aufgesetzt ist. Der Balkentransport selbst erfolgt auf der Antriebsvorrichtung mittels von unten, und erforderlichenfalls unter einstellbarer Höhe auch von oben, gegen den Balken anliegend angetriebener Rollenbahnen. Nicht am Balken selbst, sondern an wenigstens einer von den Antriebs-Rollen wird dort mittels eines Messfühlers der Balkenvorschub in die Säge hineinen erfaßt. Eine derartige Säge mit Maßnahmen zum Ausscheiden von Schlechtholzstücken kann unter Umständen zu Beginn einer Abbundanlage installiert sein; für die Positionierung und Handhabung zur Profilierung des Balkens in wenigstens einer nachfolgenden Maschinenzone als dem eigentlichen Funktionsbereich einer Abbundanlage ist sie ohne Aussagekraft, insbesondere genügen die bei jener Säge vorgesehenen meßtechnischen Maßnahmen überhaupt nicht den bezüglich aufeinanderfolgender Bearbeitungspositionen in einer Abbundanlage zu stellenden Präzisikonsanforderungen.

In der Bearbeitungsposition, in der ein bestimmter Bereich des Werkstücks für ein Werkzeug zugänglich ist, erfolgt - noch vor dem Eingriff des Werkzeugs - mit vertikalen und horizontalen Hydraulik-Spannstempeln ein Andruck sowohl horizontal gegen die rückwärtige Längsführung wie auch vertikal auf das Vorschubbett, um in der gerade erreichten Transportstellung eine eindeutige und unverrückbare Positionierung für die maßgerechte spanende Profilierung sicherzustellen. Dieses im Zuge der Bearbeitungsfolge sehr häufig erfolgende Einspannen und Lösen des Werkstückes benötigt in der Summe der unterschiedlichen Bearbeitungspositionen eine recht lange Zeitspanne, in der keine Bearbeitung erfolgen kann.

Das Verfahren des Transportwagens längs der Fahrschiene parallel zum Vorschubbett über alle Bearbeitungsstationen und die beiderseits in diesen Verfahrweg integrierten Rollenbahnen hin-weg - bis auch das längste für die Bearbeitung in Betracht kommende Werkstück (wie insbesondere ein Balken von mindestens acht, aber auch bis zu zwölf Metern Länge) in die Säge eingefördert, dann durch die Maschinenzone hindurch transportiert und danach wieder ganz aus der letzten Bearbeitungsstation herausgezogen worden ist, um nun von der Ausförder-Rollenbahn quer zu seiner Vorschub- und Längsrichtung in einen Querförderer abgeliefert werden zu können - bedingt Bau- und dementsprechend Installationslängen für eine herkömmliche Abbundanlage in der typischen Größenordnung von bis zu 30 Metern und mehr. Das bedeutet nach Abliefern eines fertig bearbeiteten Werkstückes an der Ausförderrollenbahn am Ende der Anlage einen relativ hohen Zeitbedarf für das Zurückfahren des Schlepp-Wagens mit nun angehobenem Andruckarm über die gesamte Anlagen-Baulänge hinweg bis zur Übernahmeposition für das auf der Einförderrollenbahn vor der Säge unterdessen bereitgelegte Folgewerkstück, also zurück vom Ende bis ganz zum Anfang der Abbundanlage.

Abgesehen von diesem unproduktiven Energie- und Zeitbedarf wirft die Länge der Anlage in der Praxis aber vor allem auch noch das Problem auf daß solche Aufstellabmessungen zwischen Anfang der Einförder- und Ende der Ausförder-Rollenbahnen in schon bestehenden Werkhallen oft gar nicht verfügbar sind. Die entsprechenden Hallenmaße müssen dann durch genehmigungsrechtlich problematische und zumeist auch unschöne da oft behelfsmäßige lokale Anbauten verlängert werden, um darin eine herkömmliche Abbundanlage vollständig unterbringen und witterungsgeschützt betreiben zu können. Durch derartige Anbauten wird auf engem Gelände ferner gelegentlich die Infrastruktur in Hinblick auf einen die Halle umrundenden Verkehrsweg nachhaltig beeinträchtigt; und auch die konstruktionsbedingte Einbeziehung der Einförder- und Ausförderrollenbahnen in den Betriebsbereich des gesteuerten Vorschubes durch die Abbundanlage hindurch bedingt daß Ladefahrzeuge in der Halle verkehren müssen, was an sich aus verschiedenen Gründen (Unfallgefahr, Abgasbelästigung, Verkehrsraumerfordernisse) besser vermieden werden sollte.

Aus diesen Überlegungen heraus liegt vorliegender Erfindung die technische Problemstellung zugrunde, eine derartige Abbundanlage wesentlich kompakter, nämlich insbesondere kürzer bauend auszulegen und dabei nicht nur die Durchsatzgeschwindigkeit sondern möglichst sogar auch die Positioniergenauigkeit der nacheinander zu bearbeitenden Werkstücke noch zu erhöhen.

Diese Aufgabe ist erfindungsgemäß durch der Merkmale des Hauptanspruches gelöst Danach wird das Werkstück für seinen Vorschub an seinen einander gegenüberliegenden vertikalen Seitenbereichen möglichst großflächig, nämlich über eine möglichst große Länge, zwischen zueinander parallelen Reihen oder Folgen von gleichlaufenden Walzen bzw. um diese herumlaufenden Bändern eingeklemmt, die in Längsrichtung des Vorschubbettes über die Bearbeitungsstationen der Abbundanlage wirken. Im Falle von Mitnahme-Bändern sind diese vorzugsweise im jeweiligen Bearbeitungsbereich unterbrochen, um Kollisionen mit den im Raum verschwenkbaren Werkzeugen zu vermeiden. Beiderseits der jeweiligen Unterbrechung sind die Mitnahme-Bänder mit zwangsgesteuert gleichlaufenden Antrieben ausgestattet.

Die eine dieser beiden zueinander parallel sich erstreckenden Walzen- oder Bänder-Reihen dient nun, anstelle der bisherigen Queranschlag- und Längsführungsleiste, als parallel zur Transportrichtung anlagenfest installierte Längsführung; und die andere, also parallel dazu verlaufende zweite Reihe paßt sich - nämlich in ihrem Querabstand zu jener Längsführung - der Werkstückbreite an, indem sie sowohl während der Transportbewegung wie auch beim Positionieren und dann auch noch während des Bearbeitens das Werkstück quer zu dessen Längs- und Transportrichtung horizontal gegen die starr montierte ersterwähnte Reihe drückt.

Anders als die Laufschiene für den herkömmlichen Werkstück-Vorschub mittels des Schleppschuh-Transportwagens brauchen also diese seitlichen Transportwalzen oder -bänder sich nicht auch noch über die gesamte Länge von Einförder- und Ausförder-Rollenbahnen zu erstrecken, sondern vor bzw. hinter der ersten bzw. letzten Bearbeitungsstation nur noch über eine so kurze Distanz zu wirken, daß das Werkstück für seine Zufuhr bzw. Abfuhr zuverlässig zwischen den Walzen bzw. Bändern eingefaßt ist. Dadurch entfällt mit der erfindungsgemäßen Lösung an der Abbundanlage nun nicht nur der ganz erhebliche apparative Aufwand für Aufbau und Betrieb des Schleppwagens einschließlich seiner Schienenführung; sondern es erübrigt sich jetzt auch fast die gesamte Anlagen-Baulänge, die bisher die Summe aus den Einförder- und den Ausförder-Rollenbahnen ausmachte, und damit immerhin etwa zwei Drittel der gesamten Baulänge der herkömmlichen Abbundanlagen. Und weil der über dem Werkstück störende Schleppwagen mit der Laufschiene jetzt entfallen ist, kann nun eine echte VierseitenBearbeitung vorgenommen werden, etwa ein Kettenstemmer auch von oben an einem Holzbalken angesetzt werden.

Vor der Säge und hinter der Maschinenzone sich etwa noch anschließende Rollenbahnen für den Balkentransport sind nun nicht mehr integraler Bestandteil der Abbundanlage, weil gesteuerter und gemessener Werkstück-Vorschub nun nur noch zwischen den Walzen bzw. Bändern aber nicht mehr jenseits dieser, also nicht mehr im Zuge des Verlaufes von etwaigen eingangsseitigen und ausgangsseitigen Rollenbahnen vorkommt Solche zusätzlichen Rollenbahnen können deshalb jetzt separat für das Arbeiten als lose Beistellteile bereitgestellt werden. So ist es möglich geworden, einzelnen Rollen-Gestelle z.B. nach dem Öffnen von Hallentoren bedarfsweise - nämlich je nach der aktuell zu erwartenden maximalen Werkstücklänge - in Verlängerung der nun extrem kompakten da kurzbauenden Abbundanlage lose vor die Säge und hinter die letzte der Bearbeitungsstationen zu schieben. Das erlaubt nicht nur kleinere, im wesentlichen auf den Durchmesser des Kreissägeblattes zuzüglich der Maschinenzone beschränkte Werkhallen; sondern das Herausragen der mobilen Rollenbahnen-Gestelle aus der während der Arbeit geöffneten Halle fördert auch die Anlieferung und das Abholen der Werkstücke auf einem die Halle umgebenden Verkehrsweg, ohne mit dem Lastkraftwagen oder mit einem Stapler dafür erst in die Halle hineinfahren zu müssen.

Das beidseitig-gegensinnige seitliche Einspannen des zwischen den Transport-Walzen oder -Bändern über das Vorschubbett gleitenden Werkstückes bleibt nicht nur für den Transportvorgang und zum Positionieren, sondern auch danach, während der mechanischen Bearbeitung des Werkstücks, aufrechterhalten, um es danach durch einfache Antriebssteuerung sofort weiterzubefördern. Somit entfällt nicht nur - neben dem Schleppwagen und seiner Führung samt dem, wie schon erwähnt, erheblichen Zeitbedarf für das Zurückfahren des Schleppwagens über die bisher sehr lange Abbundanlage zur Übernahme des Folgewerkstückes vor der Säge - der bisherige apparative Aufwand für die Installation von hydraulisch zu betätigenden Spann-Stempeln in jeder Bearbeitungsstation, sondern auch noch der Zeitbedarf für das Wechselspiel deren Spann- und Lösevorgänge in den aufeinanderfolgenden Bearbeitungsstationen. Vor allem aber erbringt die erfindungsgemäße Lösung mit dem zuverlässigen Einklemmen des Werkstückes zwischen den Bändern den weiteren Vorteil, eine programmgesteuerte Bewegung des Werkstückes am eingreifenden Werkzeug vorbei höchst präzise, also reproduzierbar als vierte Bearbeitungsachse (neben den Dreh-., Hub- und Querbewegungen des Werkzeugs) für z.B. das Einschneiden von schräg zur Werkstück-Längsachse verlaufenden Profilen wegen der beidseitigen und großflächigen Transport-Einfassung auch dann noch auf dieser neuen Anlage zuverlässig realisieren zu können, wenn die Oberfläche des Werkstücks nicht ganz trocken ist.

Um das Folgewerkstück schon der Säge zuführen zu können, wenn das aktuell in Bearbeitung befindliche Werkstück noch gar nicht abgeliefert wurde, werden die Transportwalzen- oder Bänder vor der Säge getrennt von den in der Folge dann synchron angetriebenen Abschnitten hinter der Säge betrieben. Zweckmäßigerweise erfolgt während der Werkstück-Bewegung eine unten näher erläuterte Weg- oder Positionsmessung relativ zur Abbundanlage unmittelbar auf der Werkstück-Oberfläche zwischen den für den Transport parallel anliegenden und synchron angetriebenen Walzen-Reihen oder Bändern. Eine Schlupfmessung der eingangs erwähnten Art, also von der Werkstückoberfläche nicht zur stationären Anlage sondern zum sich bewegenden Transportmittel hin, kann vorsorglich zusätzlich vorgesehen sein.

Anhand nachfolgender Zeichnungsbeschreibung wird die Erfindung hinsichtlich ihrer Eigenarten, Vorteile und zweckmäßigen Weiterbildungen näher erläutert. Die nicht ganz maßstabsgerechte und auf das Wesentliche beschränkte Skizze eines bevorzugten Realisierungsbeispieles zur Erfindung zeigt in
- Fig. 1: eine erfindungsgemäß aufgebaute kompakte Abbundanlage in Seitenansicht hinter die in Blickrichtung vorne stehenden Transportbänder und
- Fig.2: die Anlage gemäß Fig. 1 in Draufsicht unter den Antrieb für die Transportbänder und unter einen Wegmeßstreifen.

Die erfindungsgemäße Abbundanlage 11 ist außerordentlich kurzbauend, weil im Gegensatz zu herkömmlichen Anlagen dieser Gattung sich ihr Fördermechanismus 12 für den Werkstück-transport durch die Anlage 11 hindurch nun nicht mehr -jedenfalls nicht mehr wesentlich - über die Länge hinaus erstreckt, die durch die Aufeinanderfolge von Bearbeitungsstationen 13 längs einer Transportbahn gegeben ist. Insbesondere sind die jeweils werkstücklangen, etwa als Gleitbetten oder bevorzugt als passive (also nicht selbst antreibende) Rollenbahnen ausgelegten Einförder- und Ausförder-Bahnen 15 nun nicht mehr fester funktionaler Bestandteil der Abbundanlage 11, da sie nicht mehr von den Fördermechanismen 12 überdeckt werden.

Für die maßgerechte Profilierung eines Werkstücks 16 nach Maßgabe eines Abbundprogrammes weist eine moderne Abbundanlage 11 als Bearbeitungsstationen 13 typischerweise eine Schwenk-Kappsäge 13.1 mit großem Sägeblatt auf; das sich gegenüber der Horizontalen neigen sowie zwischen den Orientierungen parallel und quer zur Transportrichtung 14 verdrehen läßt; und nach der Säge 13.1 eine Maschinenzone mit einem Universal-Fräser 13.2 sowie gelegentlich z.B. auch noch mit einer Bohrstation (in der Zeichnung nicht berücksichtigt). Die Kapp-Säge 13.1 und der Fräser 13.2 sind - u.U. auch noch unter aktuellem, spanendem Eingriff des Werkzeugs in das Werkstück 16- auf Schienen 17 parallel zu der Bewegungsebene und quer zur Längsachse also zur Durchlauf-Transportrichtung 14 des Werkstücks 16 verfahrbar und so gegenüber dem in der Anlage positionierten Werkstück 16 seitlich versetzbar; und die rotierenden Bearbeitungs-Werkzeuge, nämlich das Sägeblatt der Kappsäge 13.1 und die Walzen-, Finger- oder Profilfräser des Universalfräsers 13.2, sind quer zu jener Bewegungsebene heb- und senkbar und um diese Hubachse verschwenkbar, um an einer vorgegebenen Stelle längs des Werkstückes 16 unter entsprechendem Angriffswinkel zu spanender Bearbeitung mit dem Werkstück 16 in Eingriff zu gelangen. Der Fräser 13.2 ist also - bis auf seine Querverfahrbarkeit - stationär installiert, die für geneigt gegenüber der Transportrichtung 14 verlaufende Profile erforderliche vierte Bearbeitungsachse wird nun nicht durch Längsverfahren des Fräsers 13.2 am fest eingespannten Werkstück 16 vorbei realisiert, sondern viel zeitsparender durch Vorschub des Werkstückes 16 zwischen den Walzen 20 bzw. Bändern 24 am arbeitenden Fräswerkzeug entlang.

Abstände vor, zwischen oder hinter den Maschinentischen 18 der Bearbeitungsstationen 13 können durch niveaugleiche Vorschubbetten 19 überbrückt sein, etwa durch Gleitbleche oder, wie in der Zeichnung berücksichtigt, durch ebenfalls nicht-angetriebene Rollenbahnen in der Ebene der Maschinentische 18.

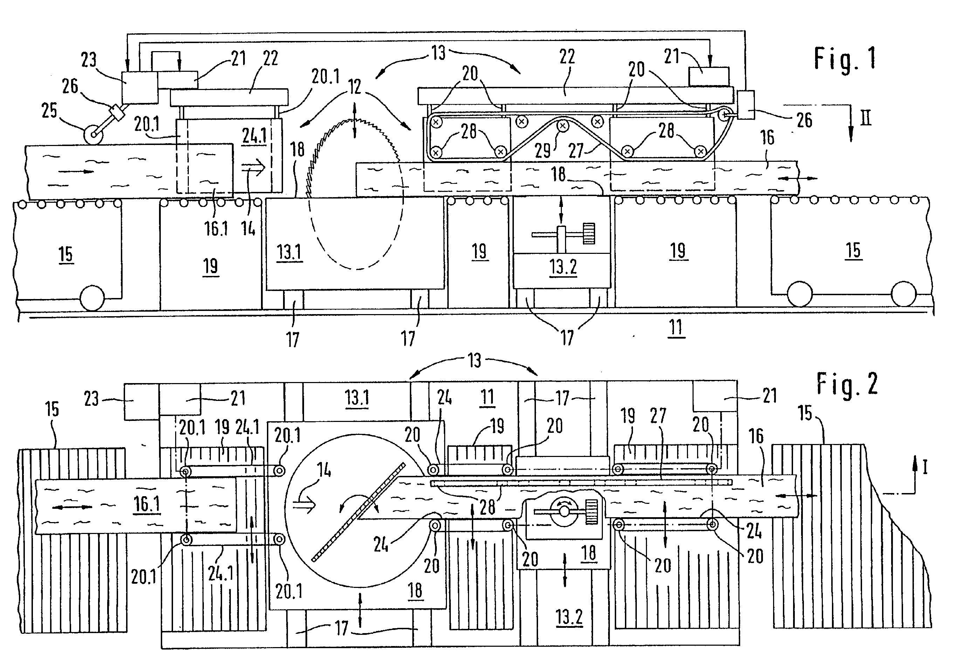

Der Vorschub des Werkstücks 16 in Transportrichtung 14, ein für das genaue Positionieren gegebenenfalls erforderlicher Rückhub und eine etwa erforderliche vorübergehende Transportrichtungsumkehr (um z.B. einen bestimmten vorneliegenden Bereich des Werkstücks 16 noch einmal an einer rückwärtigen Station 13 bearbeiten zu können oder nach seiner Fräs-Bearbeitung mittels der Kappsäge 13.1 vom Restwerkstück abzuschneiden) erfolgt ebenso wie das positionsgenaue Festlegen des Werkstücks 16 an der Bearbeitungsstation 13 nun mittels eines Fördermechanismus 12 in Form von Paaren von - um vertikal zum Förderbett orientierte Achsen - angetriebenen Walzen 20 mit reibkraftschluß-griffigen Mantelflächen. Deren gegenseitiger horizontaler Abstand quer zur Längserstreckung des Werkstücks 16 stellt sich selbsttätig ein, wenn das auf dem Tisch 18 liegend fortzubewegenden Werkstück 16 mit seinen Seitenwänden dazwischen eingeklemmt wird. Der Antrieb der Walzen 20 und damit der um sie geführten Bänder 24 kann mittels eines umsteuerbaren Positioniermotors 21 über hochkant über ihren Antriebsmotor 21 umlaufend geführte Ketten- oder Riementriebe 22 (in Fig.2 oberhalb der Sichtebene und deshalb dort nicht dargestellt, vgl. aber Fig.1) in Form etwa von Keil- oder vorzugsweise von Zahnriemen erfolgen, die drehstarr getrieblich miteinander gekoppelt sind. Deren Motor 21 ist parallel zur Ansteuerung der Bearbeitungsstationen 13 aus einem zentralen Rechner 23 programmsteuerbar.

Im Interesse einer möglichst schlupffreien Ankopplung durch große Anlageflächen sollte der Radius der Transport-Walzen 20 möglichst groß sein, deren Wandungskrümmung also möglichst gegen Null gehen. Das wird erreicht, indem in Transportrichtung 14 achsparallel aufeinanderfolgende Walzen 20 jeweils als Gruppen von unendlichen Mitnahmebändern 24 umschlungen werden. Jedes Mitnahmeband 24 schmiegt sich entsprechend seinem Andruck durch die verlagerbaren Walzen 20 und gemäß seiner Längserstreckung in Transportrichtung 14 großflächig, dabei über die konstruktive Abstützung der Walzen 20-20 kräftig gegen die zugeordnete Seitenwand des Werkstücks 16 an, das gegenüberliegend von den starr gelagerten Walzen 20 abgestützt wird.. Die über die Walzen 20 verlaufenden Mitnahmebänder 24 werden über eine mechanische oder elektrische Kupplung starr gekoppelt angetrieben, um so das Werkstück 16 synchron antreibend beiderseits über einen Abschnitt der Werkstücklänge mitzulaufen.

Eine dieser beiden zur Längserstreckung des Werkstücks 16 parallelen Walzenlinien, vorzugsweise gemäß der Beispielsdarstellung die hintere Linie der Mitnahme-Walzen 20, ist also starr längs der Durchlaufrichtung 14 durch die Abbundanlage 11 gelagert und dient so als rückwärtiger Quer-Anschlag und als Längsführung für den Vorschub des Werkstücks 16. Dieses wird für den Transport-Reibkraftschluß quer zu seiner Längsachse gegen jenen mitlaufenden Anschlag in Form der rückwärtigen Rollen gedrückt, nämlich von der anderen, vorderen Linie der Walzen 20, deren Lagerstellen auf Schlitten (in der Zeichnung nicht erkennbar, aber vergleichbar den Gleitschienen 17) quer zur Transportrichtung 14 motorisch verlagerbar sind. Durch diesen Andruck erfolgt der Kraftschluß zum Werkstück 16 sowohl für die Positionier- und Transportbewegungen, wie auch beim maßgenauen Stillstand des Werkstücks 16 zu seiner programmesteuerten Bearbeitung an einer Station 13.

Jeder der in der Anlage 11 aufeinanderfolgenden Mitnahmeband-Umläufe ist im Zuge des Werkstückdurchlaufes durch die Abbundanlage 11 immer dort unterbrochen, wo sonst bei solcher Bearbeitung Kollisionsgefahr mit hier von unten auftauchenden Werkzeugen einer Bearbeitungsstanon 13 bestehen würde. Auch die getrennten Mitnahmebänder 24 beiderseits solcher Unterbrechungen werden aber wie ein starr durchlaufendes System synchron angetrieben, die weitere Mitnahme des Werkstücks 16 erfolgt somit beiderseits einer Unterbrechung schlupffrei und ohne Versatz.

Für die Anordnung von Einführ-Walzen 20.1 vor der Kappsäge 13.1, also zu deren Beschikkung, ist jedoch ein Abkoppeln von der Quereinstellung und vom Antrieb der anderen Walzen 20 bzw. von deren Mitnahmebändern 24 zweckmäßig. Denn das eröffnet die Möglichkeit, wie in der Zeichnung durch ein wesentlich stärkeres Folge-Werkstück 16.1 veranschaulicht, die Einführbänder 24.1 schon wieder zu öffnen, während das hier schon hindurchgeschobene Werkstück 16 weiter vorn in der Abbundanlage 11 noch bearbeitet wird, um unterdessen das Folgewerkstück 16.2 schon der Kappsäge 13.1 für einen Restholz-Stirnschnitt zuzuführen. Wenn ein Werkstück 16 nach seiner Bearbeitung ausgegeben wurde, fahren die Reihen von Walzen 20 bzw. von Bändern 24 auseinander und erst dann wieder zusammen, wenn es gilt, den Anfang des nächsten dazwischen nachgeschobenen Werkstücks 16 für Transport und Positionierung durch seitliches Einklemmen zu übernehmen. Der überlappende Werkstücktransport mittels voneinander unabhängig gesteuerter Einführ- und Mitnahme- Bänder 24.1 / 24 bei bzw. nach Beginn der Anlage 11 erbringt eine spürbare Ersparnis an Durchlaufzeit durch die Abbundanlage 11.

Zum Messen des Werkstückvorschubes gegenüber einer anlagenfesten Referenzstellung, die etwa bei der Zufuhr des Werkstückes 16 mittels einer anlagefesten Lichtschranke sensiert wird (in der Zeichnung nicht berücksichtigt), und somit zum exakten Positionieren bestimmter zu bearbeitender Bereiche des Werkstücks 16 an bestimmten der Bearbeitungsstationen 13, kann ein anlagenfest gelagertes Meßrad 25 auf der Werkstück-Oberfläche abrollen und etwa über einen Tachogenerator oder einen digitalen Pulsgeber als Meßaufnehmer 26 eine Wegmessung an den zentralen Steuerrechner 23 liefern. Zuverlässiger als über ein einzelnes Meßrad 25 ist allerdings eine größerflächige oder eine über die Werkstücklänge verteilte Anlage des Meßaufnehmers 26. Dafür ist gemäß Fig.2 der Zeichnung ein biegeweiches aber längssteifes, integrales oder gegliedertes unendliches Meßband 27 zu bevorzugen, das innerhalb der Abbundanlage 11 über eine möglichst lange Strecke griffig schmiegsam gegen eine Oberfläche des Werkstücks 16 angelegt ist, dann abhebt und als über Rückführrollen 30 umlaufende Schlaufe zum Aufsetzbereich am Werkstück 16 zurückgeführt wird Dessen inniger Oberllächenkontakt kann mittels Andrückrollen 28 gewährleistet werden, die unter Zwischenlage des Meßbandes 27 elastisch gegen den Werkstück 16 angedrückt werden und dieses dabei zugleich über seine Länge bündig gegen die Ebene der Maschinen-Werktische 18 pressen. Lediglich bei Bearbeitungsstationen 13, wo wegen der Kollisionsgefahr mit Bearbeitungswerkzeugen auch die Walzen-Folgen 20-20 bzw. die Mitnahmebänder 24 unterbrochen sind, wird das umlaufende Meßband 27 vom Werkstück 16 über Stützrollen 29 abgehoben und im Dreiecksverlauf oder im Bogen hoch, also kollisionssicher darüber hinweg geführt ehe es sich wieder kontaktgebend über eine längere Strecke auf die Werkstückoberfläche absenkt. Die gute und über einen Teil der Werkstücklänge verteilte Haftkopplung des schmiegsam-biegsamen aber doch in Längsrichtung dehnungssteifen Meßbandes 27 erlaubt dabei eine lockere aber dennoch gegenüber dem Werkstück 16 praktisch schlupffreie Schlaufenführung um die Rollen 28-29-30 nach streckenweisem Anlegen auch gegen Werkstücke 16 sehr unterschiedlicher Höhe und Oberflächenkonsistenz für eine höchst genaue Transportwegmessung durch die nun stark verkürzte Abbundanlage 11 hindurch.

Es müssen aber nicht gemäß dem beschriebenen Realisierungsbeispiel die beiden zueinander parallelen Reihen von Walzen 20-20 bzw. sie umschlingenden Bändern 24 aktiv angetrieben sein; es ist sogar vorteilhafter, nur die eine Reihe (vorzugsweise die nicht quer zum Werkstück 16 verstellbare) motorisch anzutreiben und die andere infolge ihrer kraftschlüssigen Anlage gegen das vortransportierte Werkstück 16 antriebslos mitlaufen zu lassen. Dadurch entfallen etwaige antriebsseitige Gleichlaufprobleme zwischen den Walzen 20 beiderseits des Werkstückes 16; und vor allem kann dann wenigstens eines dieser vom Werkstück 16 schlupffrei mitgenommenen Bänder 24 - anstelle eines gesondert darüber angeordneten Meßbandes (27) - unmittelbar auch der Vorschubmessung des Werkstückes 16 gegenüber der ortsfesten Anlage 11 dienen.

So wird eine Abbundanlage 11 mit Fördermechanismus 12 für ein an Bearbeitungsstationen 13 zu positionierendes und zu behandelndes Werkstück 16 im Vergleich zu den bisher notwendigen Baulängen wesentlich kompakter, nämlich ohne Verzicht auf eingeführte Bearbeitungsmöglichkeiten auf nur noch etwa 15% der bisherigen Länge reduzierbar und deshalb nun auch komplett kapselbar; und das bei spürbarer Steigerung nicht nur der Durchsatzgeschwindigkeit sondern sogar auch der Positioniergenauigkeit bzw. des Bearbeitungsvorschubes eines zu bearbeitenden Werkstückes 16, indem auf den herkömmlichen Schleppwagen für Transport und Positionierung des Werkstückes 16 verzichtet wird. Stattdessen wird das in Transportrichtung 14 über die Arbeitstische 18 sich erstreckende längliche Werkstück 16 nun erfindungsgemäß - jedenfalls hinter der Säge 13.1 - für seinen Transport und für seine Positionierung jeweils am Eingang und am Ausgang von Bearbeitungsstationen 13 zwischen Paaren parallel wirkender Walzen 20 oder Mitnehmerbänder 24 eingeklemmt, von denen wenigstens eine Reihe angetrieben ist und das Werkstück kraftschlüssig mitnimmt. Zur Wegmessung erhält es dabei ein auch über den Meßaufnehmer 26 unendlich umlaufendes Meßband 27 schlupffrei streckenweise auf seine Werkstück-Oberfläche aufgepreßt, das aber dazwischen in den Werkzeugbereichen jeweils im Bogen davon abgehoben ist; wenn nicht eines der als Anschlagführung dienenden Bänder 24 antriebslos vom Werkstück 16 schlupffrei kraftschlüssig mitgenommen wird und dann zugleich als das Meßband (27) dient.

## Patentansprüche

1. Abbundanlage (11) mit einer Säge, wenigstens einer Maschinenzone und mit Fördermechanismus (12) für ein nach Passieren einer Säge (13.1) in wenigstens einer Maschinenzone als weiterer Bearbeitungsstation (13) zu positionierendes und zu behandelndes Werkstück (16), wobei das Werkstück (16) zum Bewegen durch die und zum Positionieren in der Abbundanlage (11), sowie während der Bearbeitung in einer Maschinenzone der Abbundanlage (11), von aufeinanderfolgenden Walzen (20) unter horizontalem Andruck kraftschlüssig mitgenommen bzw. gehalten wird, wobei diese Aufeinanderfolge der Walzen (20) in Bereichen von Maschinenzonen unterbrochen aber beiderseits der Unterbrechung synchron, angetrieben ist, **dadurch gezeichneit, dass** diese Aufeinanderfolge der Walzen jedoch unabhängig von den vor der Säge (13.1) gelegenen Walzen (20), angetrieben ist und wobei ein als unendliche Schlaufe über einen Meßaufnehmer (26) umlaufendes Meßband (27) mit einem Teil seiner Länge über einen Teil der in Längsrichtung sich erstreckender Oberfläche des Werkstücks (16) sich abwälzend reibkraftschlüssig verbunden aber in Bereichen von Maschinenzonen vom Werkstück (16) abgehoben ist.

2. Abbundanlage nach Anspruch 1, **dadurch gekennzeichnet,**
**daß** elastisch gelagerte Andrückrollen (28) vorgesehen sind, die unter Zwischenlage des Meßbandes (27) das Werkstück (16) gegen die Ebene von Maschinen-Werktischen (18) andrücken.

3. Abbundanlage nach einem der vorangehenden Ansprüche, **dadurch gekennzeichnet, daß** eine Aufeinanderfolge von Walzen (20) als anlagenfester Anschlag dient, gegen den das Werkstück (16) von einer dagegen quer verlagerbaren, parallelen Reihe von Walzen (20) andrückbar ist.

4. Abbundanlage nach einem der vorangehenden Ansprüche, **dadurch gekennzeichnet, daß** die an ihrem Anfang gelegenen Walzen (20) unabhängig von den hinter der Säge (13.1) folgenden Walzen (20) quer zur Werkstück-Transportrichtung (14) einstellbar sind.

5. Abbundanlage nach einem der vorangehenden Ansprüche, **dadurch gekennzeichnet, daß** Bearbeitungsstationen (13) auch noch unter Werkzeug-Eingriff in das Werkstück (16) quer zur Transportrichtung (14) des Werkstücks (16) verfahrbar sind.

6. Abbundanlage nach einem der vorangehenden Ansprüche, **dadurch gekennzeichnet, daß** sie für eine Bewegung des Werkstückes (16) in Transportrichtung (14) während Eingriffes eines Bearbeitungswerkzeugs ausgelegt ist.

7. Abbundanlage nach einem der vorangehenden Ansprüche, **dadurch gekennzeichnet, daß** der horizontale Andruck des Werkstückes (16) von quer zur Transportrichtung (14) verlagerbaren Walzen (20) gegen starr gelagerte Walzen (20) erfolgt.

8. Abbundanlage nach dem vorangehenden Anspruch, **dadurch gekennzeichnet, daß** nur starr gelagerte der Walzen (20) motorisch angetrieben sind.

9. Abbundanlage nach einem der vorangehenden Ansprüche, **dadurch gekennzeichnet, daß** als Meßband (27) wenigstens ein vom Werkstück (16) mitgenommenes Band (24) dient, das über nichtangetriebene Walzen (20) verläuft.

10. Abbundanlage nach einem der vorangehenden Ansprüche, **dadurch gekennzeichnet, daß** noch während der Bearbeitung eines bereits durch die Säge (13.1) hindurchgeschobenen Werkstückes (16) die vor der Säge (13.1) wirkenden Einführbänder (24.1) schon wieder zur Aufnahme eines nächstfolgend der Säge (13.1) zuzuführenden Werkstückes (16) öffnen.

## Claims

1. Trimming installation (11) having a saw, at least one machine zone and a conveying mechanism (12) for a workpiece (16) to be positioned and treated in at least one machine zone as further processing station (13) after passing a saw (13.1), the workpiece (16) being frictionally driven along or held by successive rollers (20) under horizontal pressure for moving through and for positioning in the trimming installation (11) and also during the processing in a machine zone of the trimming installation (11), this succession of rollers (20) being interrupted in regions of machine zones but being driven synchronously on both sides of the interruption, **characterized in that** this succession of rollers is, however, driven independently of the rollers (20) situated in front of the saw (13.1), a measuring band (27) which circulates as an endless loop over a measuring transducer (26) being connected frictionally in a rolling manner with part of its length over part of the surface, extending in the longitudinal direction, of the workpiece (16) but being lifted from the workpiece (16) in regions of machine zones.

2. Trimming installation according to Claim 1, **characterized in that** elastically mounted pressure rollers (28) are provided which, with the measuring band (27) in between, press the workpiece (16) against the plane of machine worktables (18).

3. Trimming installation according to either of the preceding claims, **characterized in that** a succession of rollers (20) serve as a fixed stop, against which the workpiece (16) can be pressed by a parallel row of rollers (20) which can be displaced transversely thereto.

4. Trimming installation according to one of the preceding claims, **characterized in that** the rollers (20) situated at the start of said trimming installation can be set transversely to the workpiece transport direction (14) independently of the rollers (20) following behind the saw (13.1).

5. Trimming installation according to one of the preceding claims, **characterized in that** processing stations (13) can be traversed transversely to the transport direction (14) of the workpiece (16) with the tool still engaged in the workpiece (16).

6. Trimming installation according to one of the preceding claims, **characterized in that** it is designed for a movement of the workpiece (16) in the transport direction (14) during engagement of a processing tool.

7. Trimming installation according to one of the preceding claims, **characterized in that** the horizontal pressure is applied to the workpiece (16) against rigidly mounted rollers (20) by rollers (20) displaceable transversely to the transport direction (14).

8. Trimming installation according to the preceding claim, **characterized in that**, of the rollers (20), only those that are rigidly mounted are motor-driven.

9. Trimming installation according to one of the preceding claims, **characterized in that** serving as measuring band (27) is at least one band (24) which is driven along by the workpiece (16) and runs over nondriven rollers (20).

10. Trimming installation according to one of the preceding claims, **characterized in that**, even during the processing of a workpiece (16) already pushed through the saw (13.1), the feed bands (24.1) which act in front of the saw (13.1) already open again for receiving the next workpiece (16) to be fed to the saw (13.1).

## Revendications

1. Installation de détachement (11) avec une scie, au moins une zone de machine et avec un mécanisme de transport (12) pour une pièce (16) à positionner et à traiter après le passage dans une scie (13.1) dans au moins une zone de machine comme autre station de traitement (13), la pièce (16) étant entraînée et maintenue par adhérence de force par des cylindres (20) successifs avec pression d'appui horizontale pour le déplacement à travers l'installation de détachement (11) et pour le positionnement dans celle-ci, ainsi que pendant le traitement dans une zone de machine de l'installation de détachement (11), cette succession de cylindres (20) étant interrompue dans des secteurs de zones de machine, mais étant entraînée de façon synchrone des deux côtés de l'interruption, **caractérisée en ce que** cette succession de cylindres est cependant indépendante des cylindres (20) posés devant la scie (13.1) et un ruban de mesure (27) tournant sous la forme d'une boucle continue au-dessus d'un enregistreur de mesure (26) étant reliée par adhérence et frottement et en se déroulant à une partie de sa longueur sur une partie de la surface, s'étendant dans le sens de la longueur, de la pièce (16), mais étant soulevée de la pièce (16) dans des secteurs de zones de machine.

2. Installation de détachement selon la revendication 1, **caractérisée en ce que** des galets de pression (28) logés de façon élastique sont prévus, lesquels appuient la pièce (16) contre le plan d'établis de machines (18) avec l'intercalage du ruban de mesure (27).

3. Installation de détachement selon l'une quelconque des revendications précédentes, **caractérisée en ce qu'**une succession de cylindres (20) sert de butée résistante à l'appui, contre laquelle la pièce (16) peut être appuyée par une série de cylindres (20) parallèles et pouvant être placés transversalement à la pièce.

4. Installation de détachement selon l'une quelconque des revendications précédentes, **caractérisée en ce que** les cylindres (20) situés au début de ladite installation de détachement peuvent être réglés indépendamment des cylindres (20) se succédant derrière la scie (13.1) transversalement au sens de transport de la pièce (14).

5. Installation de détachement selon l'une quelconque des revendications précédentes, **caractérisée en ce que** des stations de traitement (13) peuvent être déplacées également par engagement de l'outil dans la pièce (16) transversalement au sens de transport (14) de la pièce (16).

6. Installation de détachement selon l'une quelconque des revendications précédentes, **caractérisée en ce qu'**elle est conçue pour un déplacement de la pièce (16) dans le sens de transport (14) pendant l'engagement d'un outil d'usinage.

7. Installation de détachement selon l'une quelconque des revendications précédentes, **caractérisée en ce que** la pression horizontale sur la pièce (16) s'effectue par des cylindres (20) déplaçables transversalement au sens de transport (14) contre des cylindres (20) logés de façon fixe.

8. Installation de détachement selon la revendication précédente, **caractérisée en ce que** seuls des cylindres (20) logés de façon fixe sont entraînés par moteur.

9. Installation de détachement selon l'une quelconque des revendications précédentes, **caractérisée en ce que** au moins une bande (24) entraînée par la pièce (16), qui est disposée au-dessus de cylindres (20) non entraînés, sert de ruban de mesure (27).

10. Installation de détachement selon l'une quelconque des revendications précédentes, **caractérisée en ce que**, encore pendant le traitement d'une pièce (16) passée déjà à travers la scie (13.1), les bandes d'introduction (24.1) agissant devant la scie (13.1) s'ouvrent déjà à nouveau pour le logement d'une pièce (16) à amener à la scie (13.1) immédiatement après.
